# EUROPÄISCHE PATENTSCHRIFT

(11) **EP 3 491 268 B1**
(45) Veröffentlichungstag und Bekanntmachung des Hinweises auf die Patenterteilung: **02.09.2020**
(21) Anmeldenummer: 17751605.1
(22) Anmeldetag: 25.07.2017
(51) Int. Cl.: F16G 15/06

(54) **SEILSCHLINGENSCHÄKELKÖRPER**
ROPE SLING SHACKLE BODY
CORPS DE MANILLE D'ÉLINGUE

(30) Priorität: 27.07.2016 DE 102016113896
(43) Veröffentlichungstag der Anmeldung: 05.06.2019
(73) Patentinhaber: Schmiedestück-Vertrieb Feuerstein GmbH, 45525 Hattingen (DE); Van Beest International B.V., 3360 AB Sliedrecht (NL)
(72) Erfinder: MÜLLER, Stefan, 44137 Dortmund (DE)
(74) Vertreter: Tarvenkorn, Oliver
(86) Internationale Anmeldenummer: PCT/DE2017/100619
(87) Internationale Veröffentlichungsnummer: WO 2018/019334

(56) Entgegenhaltungen:
- WO-A2-2011/002713
- JP-U- S54 137 662

## Beschreibung

Die Erfindung betrifft einen Seilschlingenschäkelkörper mit den Merkmalen des Oberbegriffs des Anspruchs 1.

Solche Seilschlingenschäkelkörper sind aus der EP 2 508 775 B1 und WO2011/002713A2. bekannt. Kennzeichnend ist eine großzügig abgerundete Innenseite des Seilaufnahmebereichs, sodass die Knickbelastung der Seilschlinge soweit wie möglich reduziert wird. Als Neuerung gibt die genannte Patentschrift bei dem auch als *Wide Body Shackle* bekannten Typ eine einzelne, zentrale Verstärkungsrippe an, welche die beiden Bogenflanken des Schäkelbogens gegeneinander abstützt und welche eine Aufnahme für ein Anschlagmittel aufweisen soll. Mit der Verstärkungsrippe soll durch eine Aussteifung quer über den gesamten Querschnitt die Festigkeit des Schäkelkörpers verbessert werden.

Überraschenderweise hat sich gezeigt, dass die Verstärkung in einigen Einsatzarten eher negativ wirkt. Zwar wird eine Abstützung der Bogenflanken über die Verstärkungsrippe erreicht, sofern die Seilschlinge genau auf der vertikalen Achse des Schäkelkörpers eingehängt wird. Dann werden durch die Rippe die Verformung des Querschnitts unter Last und folglich die Zug- und Druckspannungen im Querschnitt reduziert.

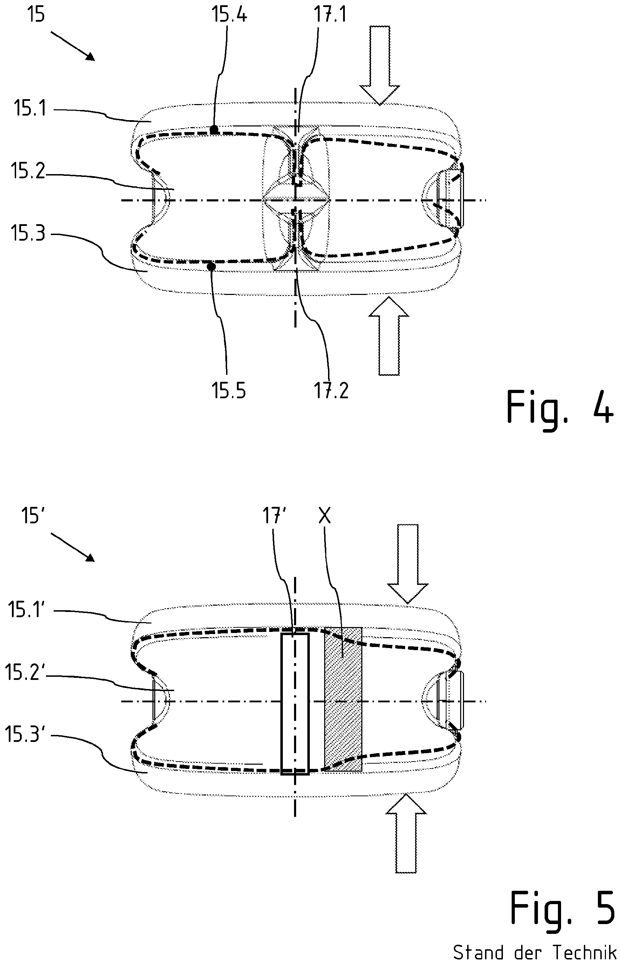

Sobald jedoch eine Seilschlinge schräg zu der vertikalen Achse angreift, also seitlich neben der Verstärkungsrippe, die die beiden Bogenflanken miteinander verbindet, wird der Querschnitt durch zusätzlich überlagerte Spannungen in Querrichtung zum normalen Verlauf der Biegespannungen zusätzlich belastet. Während sich nämlich bei einem Schäkelkörper ganz ohne Verstärkungsrippen die beiden Bogenflanken unter Last durch elastische Verformung aufeinander zu bewegen können und der gesamte Querschnitt gleichmäßig belastet wird, wird bei einem Schäkel mit durchgehender Verstärkungsrippe die gleichmäßige und stetige Verformung gestört, wie auch an den gestrichelten Linien in der nachfolgend noch näher erläuterten Figur 5 zum Stand der Technik zu sehen ist. Somit entstehen zusätzliche Spannungen zwischen den nicht abgestützten, also stärker verformbaren Seitenbereichen am Schäkelbogen und dem zentralen, abgestützten Bereich. Der Schäkelkörper wird bei einer schräg angreifenden Last mitunter stärker belastet, als wenn er gar keine Verstärkungsrippe besitzen würde.

Die Aufgabe der vorliegenden Erfindung besteht somit darin, einen Schwerlast-Seilschlingenschäkel hinsichtlich des Spannungsverlaufs bei schräg angreifenden Lasten zu optimieren.

Diese Aufgabe wird durch einen Seilschlingenschäkelkörper für einen Schwerlastseilschlingenschäkel mit den Merkmalen des Anspruchs 1 gelöst.

Erfindungsgemäß ist vorgesehen, grundsätzlich zwar eine gewisse Aussteifung der Bogenflanken im Bereich der vertikalen Mittelachse vorzusehen, was der Mehrzahl der Lastfälle in der Praxis entspricht.

Andererseits wird nach der Erfindung die elastische Verformung im bogenförmigen Querschnitt des Seilschlingenschäkelkörpers in der Mitte nicht mehr vollständig unterbunden. Folglich werden keine überlagerten Zusatzspannungen mehr in denjenigen Fällen hervorgerufen, in denen die Lastangriffsrichtung nicht mit der Hoch- bzw. Mittelachse des Seilschlingenschäkelkörpers übereinstimmt. Dazu ist die Verstärkungsrippe erfindungsgemäß in der Mitte bis zum Bogengrund herab unterbrochen. Es sind zwei miteinander fluchtende Teilrippen ausgebildet, die sich jeweils von der Oberkante einer Bogenflanke bis in den Bereich des Bodengrundes erstrecken, die sich jedoch nicht berühren und die einen genügend breiten freien Abstand zwischen ihnen lassen, so dass eine unter Last im Bogengrund eintretende Verformung nicht behindert wird.

Die Erfindung wird mit Bezug auf die Zeichnungen und anhand eines Ausführungsbeispiels näher erläutert. Die Figuren zeigen im Einzelnen:
- Figur 1: einen Schnitt durch einen Seilschlingenschäkelkörper von vorn;
- Figur 2: einen Schnitt durch den Seilschlingenschäkelkörper in seitlicher Ansicht;
- Figur 3: einen Schwerlastschäkel mit Bolzen in Ansicht von vorn;
- Figur 4: die Verformung bei seitlich angreifenden Lasten bei einem Seilschlingenschäkelkörper nach der Erfindung, in Ansicht von oben und
- Figur 5: die Verformung bei seitlich angreifenden Lasten bei einem Seilschlingenschäkelkörper nach dem Stand der Technik, in Ansicht von oben.

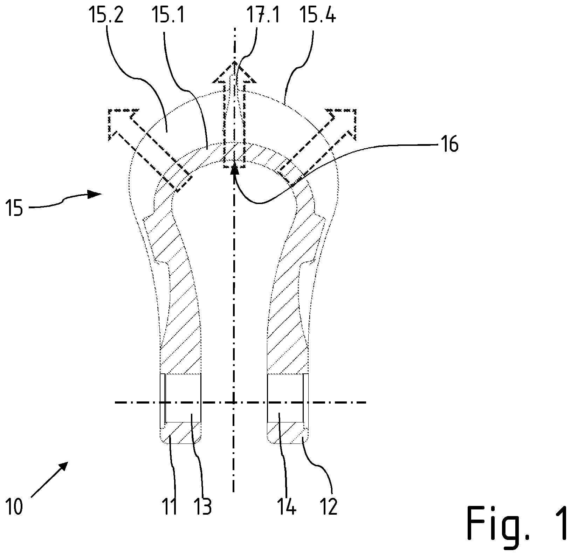

In Figur 1 ist ein Seilschlingenschäkelkörper 10 geschnitten dargestellt, und zwar in Ansicht von vorn in einer im Bereich der Hochachse liegenden Schnittebene. Im Wesentlichen besteht der Seilschlingenschäkelkörper 10 aus einem Bogenkörper 15 und zwei parallelen Endabschnitten 11,12, welche jeweils eine Durchgangsbohrung 13, 14 zur Aufnahme eines Schäkelbolzens aufweisen. Der obere Bereich des Schäkelbogens 15, der einen Seilaufnahmebereich 16 bildet, ist hufeisenförmig gerundet ausgebildet. Damit kann die Belastungsrichtung, die durch den Angriffspunkt einer Seilschlinge definiert wird, nicht nur vertikal und mittig auf der Hochachse liegen, sondern auch außermittig und schräg dazu, wie durch die Blockpfeile angedeutet ist.

Der Schäkelbogen 15 umfasst einen Bogengrund 15.2 und zwei zueinander beanstandeten Bogenflanken, von denen in Figur 1 eine hinter der Schnittebene liegende Bogenflanke 15.2 erkennbar ist. Nur genau auf der Hochachse ist eine Teilrippe 17.1 ausgebildet, die die Hohlkehle zwischen dem Bogengrund 15.2 und der Bogenflanke 15.1 ausfüllt.

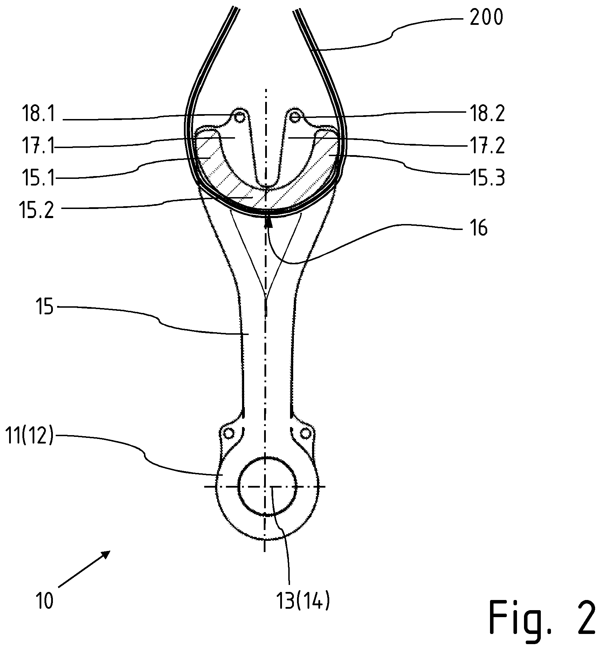

Wie die Querschnittszeichnung des Seilschlingenschäkelkörpers 10 mit einer Seilschlinge 200 in Figur 2 zeigt, ist der Querschnitt in dem Teil des Schäkelbogens 15, welcher den Seilaufnahmebereich 16 bildet, stark gerundet. Die Schnittzeichnung in Figur 2 zeigt deutlich, dass die Querschnittschnittfläche die Form eines halben Kreisrings besitzt, sodass Bogenflanken 15.1,15.3 und Bogengrund 15.2 stufenlos und stetig ineinander übergehen. Der Kreisbogen im Querschnitt des Seilaufnahmebereichs 16 erstreckt sich über wenigstens 180°, insbesondere über 200°.

An der nach außen gewandten oberen Seite des Schäkelbogens 15 bildet sich eine Hohlkehle, die punktuell durch die Teilrippen 17.1,17.2 überbrückt ist, wobei die Teilrippen 17.1,17.2 aber zur Mitte hin jeweils nur bis zum Bogengrund 15.2 herab erreichen.

Die Teilrippen erstrecken 17.1, 17.2 bis über die Oberkanten 15.4, 15.5 der Bogenflanken 15.1, 15.3 hinaus nach oben und haben an dem überstehenden Teil jeweils wenigstens eine Aufnahmeöffnung 18.1, 18.2. An dieser kann ein kleinerer Schäkel angebracht werden, über den der Seilschlingenschäkelkörper 10 selbst angehoben werden kann, z. B. um ihn in eine Seilschlinge einzuhängen. Weitere Aufnahmeöffnungen sind am Übergang des Schäkelbogens 15 in die Endbereiche 11, 12 vorgesehen.

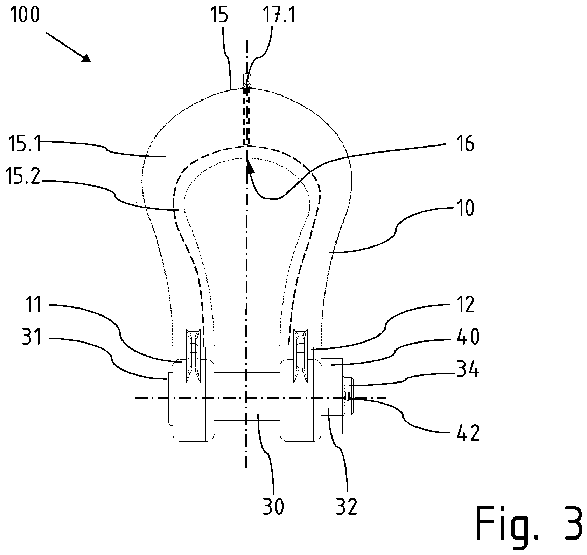

Figur 3 zeigt einen fertig montierten Seilschlingenschäkel 100, bei dem in den Endbereichen 11,12 ein Schäkelbolzen 30 mit einem Kopf 31 und einem Gewindeabschnitt 32 eingesetzt ist. Auf den Gewindeabschnitt 32 ist eine Sicherungsmutter 40 aufgeschraubt. An einem endseitigen Absatz 34 ist zur Sicherung der Mutter 40 ein Splint 42 eingesetzt.

Figur 4 zeigt eine Ansicht auf den Schäkelbogen 15 von oben. Die gestrichelten Linien stellen in einer zur Verdeutlichung überzeichneten Weise den Verlauf der Bogenkanten 15.4, 15.5 bei einer Verformung ein, wie sie sich durch eine außermittig angreifende Last, die in Form der Blockpfeile dargestellt ist, einstellt. Die sich gegenüberliegenden Bogenkanten 15.4, 15.5 können sich im Bereich des Lastangriffs durch eine dort liegen Seilschlinge ungehindert aufeinander zu bewegen. Zur linken Seite hin erfolgt ein sehr allmählicher und stetiger Rückgang der Verformung.

Zum Vergleich ist ein Seilschlingenschäkel 10' nach dem Stand der Technik mit einer durchgängigen Verstärkungsrippe 17' in der Mitte in Figur 5 dargestellt. Sein Querschnitt umfasst im Bereich eines Schäkelbogens 15' ebenso einen zentralen Bogengrund 15.2' und sich seitlich daran anschließende Bogenflanken 15.1', 15.3'. Sobald eine Seilschlinge schräg zu der vertikalen Achse angreift, also seitlich außerhalb des Bereichs einer Verstärkungsrippe 17', die die beiden Bogenflanken 15.1', 15.3' direkt miteinander verbindet, wird der Querschnitt durch zusätzlich überlagerte Spannungen belastet.

Während sich die beiden Bogenflanken erfindungsgemäß unter Last durch elastische Verformung aufeinander zu bewegen könnten, wird dies nach dem Stand der Technik durch die mittig angeordnete Verstärkungsrippe 17' unterbunden oder zumindest behindert. Somit entstehen dort zusätzliche und anders orientierte Spannungen, insbesondere in dem mit "X" bezeichneten Bereich neben der Verstärkungsrippe 17'. Der Seilschlingenschäkelkörper 10' wird also bei einer schräg angreifenden Last effektiv stärker belastet, als wenn er gar keine Verstärkungsrippe 17' besitzen würde.

## Patentansprüche

1. Seilschlingenschäkelkörper (10) für einen Schwerlastseilschlingenschäkel (100) zum Anhängen an eine Seilschlinge, wenigstens umfassend:
- zwei sich gegenüberliegende Endabschnitte (11, 12), von denen jeder eine Durchgangsöffnung (13, 14) zur Aufnahme eines Bolzens (30), aufweist;
- einen zentralen Bogen (15), der sich zwischen den Endabschnitten (11, 12) erstreckt und der zumindest in einem Seilaufnahmebereich (16) einen Bogengrund (15.2) und beidseitig daran angeordnete, zueinander beabstandete Bogenflanken (15.1, 15.3) aufweist, wobei der Bogen (15) zumindest im Seilaufnahmebereich (16) an seiner Innenseite eine konvex gerundete Seilauflagefläche aufweist, die sich von einer Oberkante (15.4, 15.5) der einen Bogenflanke (15.1, 15.3) bis zur Oberkante (15.4, 15.5) der jeweils anderen Bogenflanke (15.1, 15.3) erstreckt;
- wenigstens eine Verstärkungsrippe, die zwischen den Bogenflanken (15.1, 15.3) angeordnet ist,
**dadurch gekennzeichnet, dass** die Verstärkungsrippe in zwei Teilrippen (17.1, 17.2) geteilt ist, über die jeweils eine Bogenflanke (15.1, 15.3) am Bogengrund (15.2) abgestützt ist, wobei zwischen den Teilrippen (17.1, 17.2) bis herab zum Bogengrund (15.2) ein Abstand besteht.

2. Seilschlingenschäkelkörper (10) nach Anspruch 1, **dadurch gekennzeichnet, dass** sich die Teilrippen (17.1, 17.2) bis über die Oberkanten (15.4, 15.5) der Bogenflanken (15.1, 15.3) hinaus nach oben erstrecken und an dem überstehenden Teil jeweils wenigstens eine Aufnahmeöffnung (18.1, 18.2) aufweisen.

3. Seilschlingenschäkelkörper (10) nach Anspruch 1 oder 2, **dadurch gekennzeichnet, dass** die zueinander weisenden Innenkanten der Teilrippen (17.1, 17.2) geradlinig ausgebildet sind.

4. Seilschlingenschäkelkörper (10) nach einem der Ansprüche 1 bis 3, **dadurch gekennzeichnet, dass** die Bogenflanken (15.1, 15.3) und der Bogengrund (15.2) gemeinsam im Seilaufnahmebereich (16) einen Torus-Innenringabschnitt ausbilden.

5. Seilschlingenschäkel (100) zum Anhängen einer Seilschlinge (200), mit wenigstens einem Seilschlingenschäkelkörper (10) nach einem der vorhergehenden Ansprüche und mit einem in die Durchgangsöffnungen (13, 14) einsetzbaren Bolzen (30), der an einem Ende einen Kopf (31) aufweist und am anderen Ende einen Gewindeabschnitt (32), der eine Sicherungsmutter (40) aufnimmt.

## Claims

1. Rope sling shackle body (10) for a heavy load rope sling shackle (100) for attaching to a rope sling, at least comprising:
- two opposite end portions (11, 12), each of which has a through-opening (13, 14) for receiving a bolt (30);
- a central arc (15), which extends between the end portions (11, 12) and has, at least in a rope receiving region (16), an arc bottom (15.2) and mutually spaced-apart arc flanks (15.1, 15.3) arranged on either side of the latter, wherein the arc (15) has, at least in the rope receiving region (16), on its inner side, a convexly rounded rope supporting face, which extends from a top edge (15.4, 15.5) of one arc flank (15.1, 15.3) to the top edge (15.4, 15.5) of the respectively other arc flank (15.1, 15.3);
- at least one reinforcing rib, which is arranged between the arc flanks (15.1, 15.3),
**characterized in that** the reinforcing rib is divided into two part-ribs (17.1, 17.2), via which a respective arc flank (15.1, 15.3) is supported on the arc bottom (15.2), wherein there is a spacing between the part-ribs (17.1, 17.2) right down to the arc bottom (15.2).

2. Rope sling shackle body (10) according to Claim 1, **characterized in that** the part-ribs (17.1, 17.2) extend upwards beyond the top edges (15.4, 15.5) of the arc flanks (15.1, 15.3) and each have at least one receiving opening (18.1, 18.2) at the protruding part.

3. Rope sling shackle body (10) according to Claim 1 or 2, **characterized in that** the mutually facing inner edges of the part-ribs (17.1, 17.2) are formed in a rectilinear manner.

4. Rope sling shackle body (10) according to one of Claims 1 to 3, **characterized in that** the arc flanks (15.1, 15.3) and the arc bottom (15.2) jointly form a torus inner ring portion in the rope receiving region (16).

5. Rope sling shackle (100) for attaching a rope sling (200), having at least one rope sling shackle body (10) according to one of the preceding claims and having a bolt (30) that is insertable into the through-openings (13, 14) and has at one end a head (31) and at the other end a threaded portion (32) that takes a securing nut (40).

## Revendications

1. Corps de manille d'élingue (10) pour une manille d'élingue pour charges lourdes (100) destiné à être accroché à une élingue, comprenant au moins :
- deux portions d'extrémité opposées (11, 12), dont chacune présente une ouverture de passage (13, 14) pour recevoir un boulon (30),
- une partie courbe centrale (15) qui s'étend entre les portions d'extrémité (11, 12) et qui présente, au moins dans une région de réception de câble (16), un fond de partie courbe (15.2) et des flancs de partie courbe (15.1, 15.3) espacés l'un de l'autre, disposés de part et d'autre du fond de partie courbe, la partie courbe (15) présentant, au moins dans la région de réception de câble (16), au niveau de son côté intérieur, une surface d'appui de câble arrondie sous forme convexe qui s'étend depuis une arête supérieure (15.4, 15.5) de l'un des flancs de partie courbe (15.1, 15.3) jusqu'à l'arête supérieure (15.4, 15.5) de l'autre flanc de partie courbe respectif (15.1, 15.3) ;
- au moins une nervure de renforcement qui est disposée entre les flancs de partie courbe (15.1, 15.3),
**caractérisé en ce que** la nervure de renforcement est divisée en deux nervures partielles (17.1, 17.2) par le biais desquelles un flanc de partie courbe respectif (15.1, 15.3) est supporté au niveau du fond de partie courbe (15.2), une distance existant entre les nervures partielles (17.1, 17.2) jusqu'au fond de partie courbe (15.2).

2. Corps de manille d'élingue (10) selon la revendication 1, **caractérisé en ce que** les nervures partielles (17.1, 17.2) s'étendent vers le haut jusqu'au-delà des arêtes supérieures (15.4, 15.5) des flancs de partie courbe (15.1, 15.3) et présentent, au niveau de la partie qui dépasse, à chaque fois au moins une ouverture de réception (18.1, 18.2).

3. Corps de manille d'élingue (10) selon la revendication 1 ou 2, **caractérisé en ce que** les arêtes intérieures tournées l'une vers l'autre des nervures partielles (17.1, 17.2) sont réalisées sous forme droite.

4. Corps de manille d'élingue (10) selon l'une quelconque des revendications 1 à 3, **caractérisé en ce que** les flancs de partie courbe (15.1, 15.3) et le fond de partie courbe (15.2) constituent ensemble, dans la région de réception de câble (16), une portion annulaire intérieure en forme de tore.

5. Manille d'élingue (100) pour accrocher une élingue (200), comprenant au moins un corps de manille d'élingue (10) selon l'une quelconque des revendications précédentes, et comprenant un boulon (30) pouvant être inséré dans les ouvertures de passage (13, 14), lequel présente à une extrémité une tête (31) et à l'autre extrémité une portion filetée (32) qui reçoit un écrou de fixation (40).
